# EUROPEAN PATENT APPLICATION

(11) **EP 4 729 326 A1**
(43) Date of publication of application: **22.04.2026**
(21) Application number: 24206567.0
(22) Date of filing: 15.10.2024
(51) Int. Cl.: B60K 11/02, B60K 1/00, F01P 11/02

(54) **COOLANT SYSTEM AND VEHICLE**

(71) Applicant: Scania CV AB, 151 87 Södertälje (SE)
(72) Inventor: MOHLIN, Martin, 117 59 Stockholm (SE)
(74) Representative: Scania CV AB

(57) **Abstract**

A coolant system (1) for a vehicle (2) is disclosed. The coolant system (1) comprises a coolant circuit (c2) configured to regulate the temperature of an arrangement (11) of the vehicle (2), a deaeration conduit (3), and a valve element (5) controllable between a closed state, in which the valve element (5) blocks the transfer of fluid through the deaeration conduit (3), and an open state, in which the valve element (5) allows the transfer of fluid through the deaeration conduit (3). The deaeration conduit (3) comprises a first end (3') connected to the coolant circuit (c2) at a local height maximum of the coolant circuit (c2) with respect to the vertical direction (vd') of the coolant system (1), and a second end (3") arranged below the first end (3') with respect to a vertical direction (vd') of the coolant system (1). The present disclosure further relates to a vehicle (2) comprising a coolant system (1).

## Description

### TECHNICAL FIELD

The present disclosure relates to a coolant system for a vehicle. The present disclosure further relates to a vehicle comprising a coolant system.

### BACKGROUND

Traditionally, vehicles have been powered by internal combustion engines, which produce significant amounts of heat as a byproduct. Coolant systems in these vehicles have been designed primarily to manage excess thermal energy, ensuring efficient operation and preventing overheating. With the rise of electrification in the automotive industry, including both pure electric vehicles and hybrid electric vehicles, the demands on coolant systems have shifted. Instead of simply dissipating waste heat, modern coolant systems must now focus on precise temperature regulation to maintain the optimal performance of components such as batteries and electric motors.

Electrified vehicles provide numerous advantages over traditional internal combustion engine vehicles, particularly in terms of reduced local emissions and improved energy efficiency. Pure electric vehicles rely exclusively on electric propulsion, eliminating the need for internal combustion engines and thus producing no emissions where they are used. Hybrid electric vehicles, which combine an internal combustion engine with an electric drive system, offer flexibility by allowing operation in electric-only mode for certain distances, further reducing emissions and fuel consumption. However, alongside these advantages come new technical challenges, especially regarding the effective management of heat in complex coolant systems.

In at least partially electric vehicles, such as pure electric vehicles and hybrid electric vehicles, the electricity is usually stored in an electrical storage system normally comprising a number of battery packs each comprising a number of rechargeable battery cells. Some different types of battery cells are used, such as lithium-ion battery cells, lithium polymer battery cells, as well as other types of rechargeable battery cells. Multiple battery packs are often required to ensure a sufficient available operational range of a vehicle, system voltage and power, especially in battery packs for heavier types of vehicles.

The temperature of the battery cells of a battery pack affects the performance, safety, and longevity of the battery pack. Therefore, vehicles can comprise a battery coolant circuit configured to regulate the temperature of the battery cells. This circuit typically circulates a coolant fluid through channels in or around the battery packs to absorb excess heat generated during charging and discharging cycles. By preventing overheating, the battery coolant circuit helps to maintain the efficiency of the battery cells and extends their lifespan. Additionally, in colder climates, the coolant circuit can be used to warm the battery cells to ensure efficient operation, as low temperatures can significantly impact battery performance and charging capabilities. Consequently, temperature regulation through a battery coolant circuit can ensure the reliable operation of both pure electric vehicles and hybrid electric vehicles.

A critical issue that arises in both conventional and electrified vehicle coolant systems is the presence of air within the coolant circuit. Air trapped in the system can severely impede the ability to efficiently transfer heat, resulting in localized hot spots, reduced overall cooling efficiency, and increased wear on components. These inefficiencies can significantly degrade the performance and longevity of vital systems, such as battery coolant circuits, which are essential for maintaining energy efficiency and reliability in electrified vehicles.

In traditional internal combustion engine vehicles, coolant systems typically use an expansion tank as an air separator. Deaeration conduits are placed in critical areas to guide air toward the expansion tank, where it is separated from the coolant. This system works well in relatively simple environments where air can naturally rise to the highest points and be efficiently removed. However, with the growing trend toward electrified vehicles, the complexity of coolant systems has increased. For example, large numbers of battery packs are required in heavier vehicles to ensure sufficient performance, range, and system voltage. These battery packs are often arranged in various parts of the vehicle to maximize available space, leading to more intricate installations of coolant systems. Moreover, in many cases, it may be difficult to arrange the battery packs and their associated coolant systems such that all parts of the coolant systems are located below an expansion vessel for allowing the natural migration of air to the expansion vessel.

While small amounts of air can be evacuated using pumps, larger air volumes pose significant challenges, reducing coolant flow and system efficiency. The increasingly complex arrangements of batteries and other components in vehicles call for more advanced solutions for deaerating the coolant system, to ensure optimal thermal management and maintaining vehicle performance, range, and longevity.

### SUMMARY

It is an object of the present invention to overcome, or at least alleviate, at least some of the above-mentioned problems and drawbacks. The object is achieved by the subject-matter of the appended independent claim(s).

According to a first aspect of the present disclosure, the object is achieved by a coolant system for a vehicle, wherein the coolant system is configured to be mounted to the vehicle such that a vertical direction thereof coincides with a vertical direction of the vehicle. The coolant system comprises a coolant circuit configured to regulate the temperature of an arrangement of the vehicle, a deaeration conduit, and a valve element controllable between a closed state, in which the valve element blocks the transfer of fluid through the deaeration conduit, and an open state, in which the valve element allows the transfer of fluid through the deaeration conduit. The deaeration conduit comprises a first end connected to the coolant circuit at a local height maximum of the coolant circuit with respect to the vertical direction of the coolant system, and a second end arranged below the first end with respect to the vertical direction of the coolant system.

Since the first end of the deaeration conduit is connected to the coolant circuit at the local height maximum, the deaeration conduit can be used to deaerate the coolant circuit in an efficient manner. Moreover, since the second end of the deaeration conduit is arranged below the first end, a user is allowed to deaerate the coolant circuit from a location below the local height maximum of the coolant circuit, i.e., without having to reach the connection point of the first end at the local height maximum of the coolant circuit. In other words, conditions are provided for a quick, convenient, and safe deaeration procedure of the coolant circuit, for example upon assembly or servicing of the vehicle.

Furthermore, since the coolant system allows for deaeration procedures of the coolant circuit from the location below the local height maximum of the coolant circuit, the coolant system circumvents the need for arranging an expansion vessel above the local height maximum of the coolant circuit. In addition, the coolant system allows for the placement of arrangements, such as propulsion batteries, at high locations on the vehicle while being able to efficiently deaerate a coolant circuit thereof in a quick, convenient, and safe manner. Accordingly, as a further result, a coolant system is provided that allows for increased battery capacity in a vehicle without the need for costly, space-consuming, and complex coolant systems.

Accordingly, a coolant system is provided overcoming, or at least alleviating, at least some of the above-mentioned problems and drawbacks. As a result, the above-mentioned object is achieved.

Optionally, the vertical distance between the first and second ends of the deaeration conduit exceeds half a metre, or exceeds one metre. Thereby, easy access to the second end of the deaeration conduit can be further ensured to allow for quick, convenient, and safe deaeration procedure of the coolant circuit.

Optionally, the second end of the deaeration conduit comprises a connector configured for connection to an external deaeration assembly. Thereby, deaeration procedures of the coolant circuit can be further simplified.

Optionally, the valve element is arranged in the connector. Thereby, conditions are provided for a compact solution being simple and intuitive to use.

Optionally, the valve element is configured to assume the open state when the external deaeration assembly is connected to the connector and is configured to assume the closed state when the external deaeration assembly is disconnected from the connector. Thereby, a user-friendly solution is provided for allowing quick, convenient, and safe deaeration procedures of the coolant circuit.

Optionally, the coolant system comprises an expansion vessel, wherein part of the coolant circuit is configured to be deaerated via the expansion vessel, and wherein the first end of the deaeration conduit is arranged above the expansion vessel with respect to the vertical direction of the coolant system. Thereby, a coolant system is provided in which some parts of the coolant circuit can be deaerated in an efficient manner via the expansion vessel, and wherein other parts of the coolant circuit, such as those located above the expansion vessel, can be deaerated in a quick, convenient, and safe manner via the deaeration conduit. Moreover, a coolant system is provided in which the expansion vessel can be efficiently accommodated at a previously used location on the vehicle, while being able to efficiently deaerate higher parts of the coolant circuit via the deaeration conduit.

Optionally, the vertical distance between the first end of the deaeration conduit and the expansion vessel exceeds half a metre, or exceeds one metre. Thereby, the coolant system allows for the assembly of arrangements, such as propulsion batteries, at high locations on the vehicle while being able to efficiently deaerate a coolant circuit thereof in a quick, convenient, and safe manner.

Optionally, the local height maximum of the coolant circuit is also the global height maximum of the coolant circuit. Thereby, conditions are provided for deaerating a large part of the coolant circuit using the deaeration conduit.

Optionally, the deaeration conduit is arranged such that its highest point is located above the first end with respect to the vertical direction of the coolant system. Thereby, the deaeration conduit is able to accumulate air during operation of the coolant circuit which can be subsequently removed therefrom in a deaeration procedure of the coolant system.

Optionally, the deaeration conduit is arranged such that its extension direction has a vector component parallel to the vertical direction of the coolant system along the full length of the deaeration conduit between its highest point with respect to the vertical direction and the second end. Thereby, the formation of liquid locks is avoided in the deaeration conduit between its highest point and the second end. In this manner, deaeration procedures can be further simplified because gravity acting on coolant in the deaeration conduit can be used to cause a flow of coolant through the deaeration conduit towards the second end during the deaeration procedures.

Optionally, the deaeration conduit is arranged such that the extension direction of the deaeration conduit has a vector component parallel to the vertical direction of the coolant system along the full length of the deaeration conduit between the first end and the highest point of the deaeration conduit with respect to the vertical direction. Thereby, the formation of liquid locks is avoided in the deaeration conduit between the first end and the highest point of the deaeration conduit.

Optionally, the arrangement of the vehicle is a propulsion battery. Thereby, a coolant system is provided allowing for the arrangement of the propulsion battery at a high location on the vehicle while allowing for quick, convenient, and safe deaeration procedures of the coolant circuit and circumventing the need for arranging an expansion vessel above the local height maximum of the coolant circuit.

According to a second aspect of the present disclosure, the object is achieved by a vehicle comprising a coolant system according to the first aspect of the present disclosure. Since the vehicle comprises a coolant system according to the first aspect of the present disclosure, a user is allowed to deaerate the coolant circuit from a location below the local height maximum of the coolant circuit, i.e., without having to reach the connection point of the first end at the local height maximum of the coolant circuit. In other words, conditions are provided for a quick, convenient, and safe deaeration procedure of the coolant circuit, for example upon assembly or servicing of the vehicle.

Furthermore, a vehicle is provided in which the need for arranging an expansion vessel above the local height maximum of the coolant circuit is circumvented. In addition, a vehicle is provided in which arrangements, such as propulsion batteries, can be placed at high locations on the vehicle while being able to efficiently deaerate a coolant circuit thereof in a quick, convenient, and safe manner. Accordingly as a further result, a vehicle is provided having conditions for increased battery capacity without the need for costly, space-consuming, and complex coolant systems.

Accordingly, a vehicle is provided overcoming, or at least alleviating, at least some of the above-mentioned problems and drawbacks. As a result, the above-mentioned object is achieved.

Optionally, the vehicle is a heavy wheeled vehicle, such as a truck or a bus. Thereby, a heavy wheeled vehicle is provided having at least some of the above mentioned advantages.

It will be appreciated that the various embodiments described for the method are all combinable with the control arrangement as described herein. That is, the control arrangement according to the fourth aspect of the invention may be configured to perform any one of the method steps of the method according to the first aspect of the invention.

Further features of, and advantages with, the present invention will become apparent when studying the appended claims and the following detailed description.

### BRIEF DESCRIPTION OF THE DRAWINGS

Various aspects of the present disclosure, including its particular features and advantages, will be readily understood from the example embodiments discussed in the following detailed description and the accompanying drawings, in which:
Fig. 1 schematically illustrates a vehicle according to some embodiments, and
Fig. 2 schematically illustrates a coolant system of the vehicle illustrated in Fig. 1.

### DETAILED DESCRIPTION

Aspects of the present disclosure will now be described more fully. Like reference signs refer to like elements throughout. Well-known functions or constructions will not necessarily be described in detail for brevity and/or clarity.

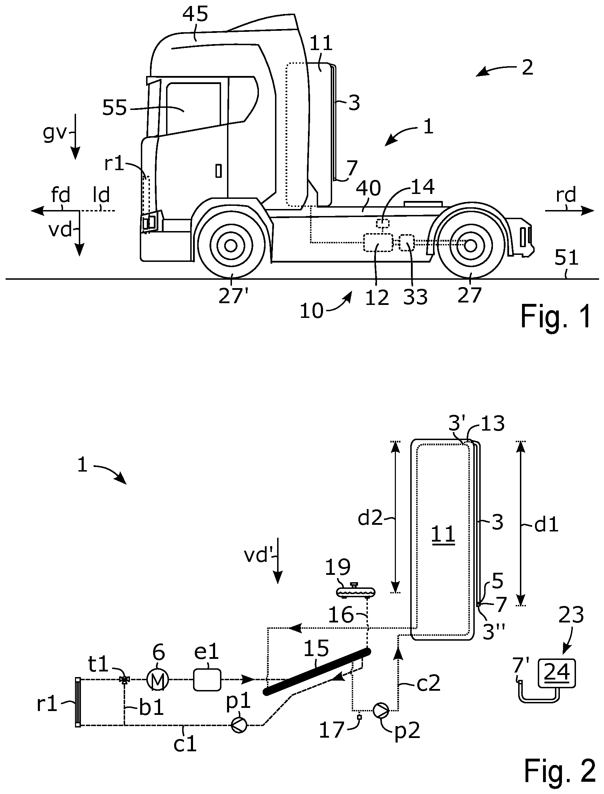

Fig. 1 schematically illustrates a vehicle 2 according to some embodiments. According to the illustrated embodiments, the vehicle 2 is a truck, i.e., a type of heavy wheeled vehicle, as well as a type of heavy commercial vehicle. According to further embodiments, the vehicle 2, as referred to herein, may be another type of heavy or lighter type of manned or unmanned vehicle for land-based propulsion such as a lorry, a construction vehicle, a tractor, a bus, a car, or the like.

The vehicle 2 comprises an at least partially electric propulsion system 10 configured to provide motive power to the vehicle 2 via wheels 27 of the vehicle 2. For reasons of brevity and clarity, the at least partially electric propulsion system 10 is in some places herein simply referred to as the "propulsion system 10". The wording "at least partially electric" as used herein, means that the propulsion system 10 of the vehicle 2 may be a fully electric propulsion system, comprising one or more electric machines as the only means of providing propulsion power to the vehicle 2, or a partially electric powertrain, comprising one or more electric machines combined with a further power unit for providing propulsion power to the vehicle 2. The partially electric powertrain may also be referred to as a hybrid electric powertrain and the further power unit referred to above may for example comprise an internal combustion engine.

The propulsion system 10 comprises an electric machine 12 for providing motive power to the vehicle 2. According to the illustrated embodiments, the electric machine 12 is configured to provide motive power to the vehicle 2 via a transmission 33 and wheels 27 of the vehicle 2. The electric machine 12 may also be referred to as an electric propulsion machine, an electric motor, an electric propulsion motor, or the like. The vehicle 2 in Fig. 1 is schematically depicted as comprising one electric machine 12. However, the propulsion system 10 of the vehicle 2 may comprise two or more electric machines 12 each configured to provide motive power to the vehicle 2.

According to the illustrated embodiments, the propulsion system 10 of the vehicle 2 is a pure electrical propulsion system. However, according to further embodiments, the propulsion system 10 of the vehicle 2 may comprise an internal combustion engine configured to provide motive power to the vehicle 2 in addition to one or more electric propulsion machines 12, as indicated above, or as an alternative to the one or more electric propulsion machines 12.

According to the illustrated embodiments, the vehicle 2 is a wheeled vehicle comprising a number of wheels 27, 27'. According to the embodiments illustrated in Fig. 1, the vehicle 2 comprises two driven wheels 27 which constitute rear-wheels of the vehicle 2. The vehicle 2 further comprises two non-driven wheels 27', which according to the illustrated embodiments constitute front-wheels of the vehicle 2. In other words, in these embodiments, the electric machine 12 is configured to provide motive power to the vehicle 2 via the driven wheels 27 of the vehicle 2. However, according to further embodiments, the vehicle 2 may comprise another configuration of driven and non-driven wheels.

In Fig. 1, the vehicle 2 is illustrated as positioned in an intended use position on a flat surface 51 supporting the vehicle 2. As seen in Fig. 1, the wheels 27, 27' of the vehicle 2 abut against the flat surface 51 when the vehicle 2 is positioned in the intended use position thereon. Moreover, in Fig. 1, a forward moving direction fd and a reverse moving direction rd of the vehicle 2 are indicated. The reverse moving direction rd of the vehicle 2 is opposite to the forward moving direction fd of the vehicle 2.

Furthermore, in Fig. 1, a longitudinal direction Id of the vehicle 2 is indicated. The longitudinal direction Id of the vehicle 2 is parallel to a flat surface 51 supporting the vehicle 2 when the vehicle 2 is positioned in the intended upright use position thereon. Moreover, the longitudinal direction Id of the vehicle 2 is parallel to the forward moving direction fd of the vehicle 2 as well as to the reverse moving direction rd of the vehicle 2. A vertical direction vd of the vehicle 2 is also indicated in Fig. 1. The vertical direction vd of the vehicle 2 is perpendicular to the longitudinal direction Id of the vehicle 2. Moreover, when the vehicle 2 is positioned in the intended use position on a flat horizontal surface, the vertical direction vd of the vehicle 2 coincides with a gravity vector gv at the location of the vehicle 2.

The number of wheels 27, 27' of the vehicle 2 is supported relative to a chassis 40 of the vehicle 2 via wheel axles. According to some embodiments, the vehicle 2 may comprise a wheel suspension system resiliently suspending the wheels 27, 27' of the vehicle 2 relative to the chassis. The chassis 40 of the vehicle 2 serves as a structural framework that supports other components and systems of the vehicle 2, such as the propulsion system 10 and a cab 45 of the vehicle 2.

That is, as is seen in Fig. 1, according to the illustrated embodiments, the vehicle 2 comprises a cab 45. According to the illustrated embodiments, the cab 45 is resiliently suspended relative to the chassis 40. The cab 45 accommodates an occupant compartment 55. The occupant compartment 55 is arranged to accommodate one or more vehicle occupants, such as a driver and possibly one or more passengers. According to the illustrated embodiments, the occupant compartment 55 also comprises a driver environment of the vehicle 2. The term "driver environment" refers to the area within the vehicle 2 where a driver operates and controls the vehicle 2. The driver environment typically includes the driver's seat, steering wheel, pedals, dashboard, and other control interfaces and displays that the driver may use to manage the functions of the vehicle 2.

The vehicle 2 comprises a coolant system 1. As is further explained herein, the coolant system 1 comprises a coolant circuit configured to regulate the temperature of an arrangement 11 of the vehicle 2. According to the illustrated embodiments, the arrangement 11 is a propulsion battery. However, according to further embodiments, the arrangement 11, as referred to herein, may be another type of arrangement, such as for example a control unit, an electrical transformer, a motor for a crane for lifting objects, a pump for a fire truck, or electrical components that may be needed for a refrigerated enclosure.

The propulsion battery is configured to provide electricity to the electric machine 12 of the propulsion system 10 of the vehicle 2. The vehicle 2 further comprises power electronics 14 configured to regulate the transfer of electricity between the electric machine 12 and the propulsion battery. The propulsion battery may comprise a number of rechargeable battery cells, such as lithium-ion battery cells, lithium polymer battery cells, nickel-metal hydride battery cells, sodium-ion battery cells, or the like.

In Fig. 1, the vehicle 2 is illustrated as comprising one propulsion battery in the form of a battery pack arranged behind the cab 45 of the vehicle 2 with respect to the forward moving direction fd of the vehicle 2. In more detail, according to the embodiments illustrated in Fig. 1, the propulsion battery is attached to the chassis 40 of the vehicle 2 at the location behind the cab 45 of the vehicle 2 with respect to the forward moving direction fd of the vehicle 2. The vehicle 2 may comprise one or more further propulsion batteries arranged at different locations on the vehicle 2

Each propulsion battery may comprise a number of battery layers each comprising a number of battery modules, wherein each battery module may comprise a number of rechargeable battery cells. According to embodiments herein, the propulsion battery has a nominal voltage within the so-called Voltage Class B, usually abbreviated VCB, namely a nominal voltage equal to, or higher than, 60 volts. The wording propulsion battery, as referred to herein, may encompass one battery pack, one layer of battery cells, or one battery module according to the above.

Fig. 2 schematically illustrates the coolant system 1 of the vehicle 2 illustrated in Fig. 1. Below, simultaneous reference is made to Fig. 1 and Fig. 2, if not indicated otherwise.

The coolant system 1 is configured to be mounted to the vehicle 2 such that a vertical direction vd' thereof coincides with a vertical direction vd of the vehicle 2. That is, in Fig. 2, the vertical direction vd' of the coolant system 1 is indicated. As understood from the above described, the vertical direction vd' of the coolant system 1 coincides with the vertical direction vd of the vehicle 2 when the coolant system 1 is mounted to the vehicle 2. Moreover, as understood from the above described, the vertical direction vd' of the coolant system 1 coincides with a local gravity vector gv when the coolant system 1 is mounted to the vehicle 2 and the vehicle 2 is positioned in the use position on a flat horizontal surface as depicted in Fig. 1.

The coolant system 1 comprises a coolant circuit c2 configured to regulate the temperature of the arrangement 11 of the vehicle 2. As mentioned, according to the illustrated embodiments, the arrangement 11 of the vehicle 2 is a propulsion battery arranged behind the cab 45 of the vehicle 2 as seen relative to the forward moving direction fd of the vehicle 2.

According to the embodiments illustrated in Fig. 2, the coolant system 1 comprises a temperature conditioning circuit c1 and a common conduit section 15, wherein the part of the temperature conditioning circuit c1 extends through the common conduit section 15. The common conduit section 15 is a type of coolant distribution manifold as is further explained herein.

The temperature conditioning circuit c1 comprises a coolant pump p1 configured to pump coolant through the temperature conditioning circuit c1. Moreover, the temperature conditioning circuit c1 comprises a radiator r1 configured to dissipate heat from the temperature conditioning circuit c1 to the surroundings. As indicated in Fig. 1, the radiator r1 may be arranged at a front portion of the vehicle 2 to be subjected to a flow of air generated upon movement of the vehicle 2 in the forward moving direction fd thereof. As an alternative, or in addition, the vehicle 2 may comprise a fan configured to generate an airflow through the radiator r1. The temperature conditioning circuit c1 further comprises a bypass line b1, which bypasses the radiator r1, and a valve t1 that can be controlled to direct coolant through the radiator r1, the bypass line b1, or both. The valve t1 of the temperature conditioning circuit c1 may also be referred to as a thermostatic valve.

According to the embodiments illustrated in Fig. 2, the temperature conditioning circuit c1 comprises an electric heater 6 controllable to heat coolant in the temperature conditioning circuit c1 and an evaporator e1 configured to cool coolant in the temperature conditioning circuit c1. The evaporator e1 is part of a heat pump circuit comprising the evaporator e1, a condenser, and a compressor, wherein the compressor is configured to compress refrigerant in the heat pump circuit in a direction towards the condenser. The heat pump circuit further comprises an expansion valve arranged upstream of the evaporator e1. In this manner, heat can be transferred from the evaporator e1 to the condenser of the heat pump circuit to thereby cool coolant in the temperature conditioning circuit c1. According to further embodiments, the temperature conditioning circuit c1 may comprise one or more other types of components for regulating the temperature of coolant in the temperature conditioning circuit c1, such as for example a condenser of a heat pump circuit.

The coolant circuit c2 extends through the arrangement 11 and is in heat exchanging contact with portions thereof. The coolant circuit c2 comprises a coolant pump p2 configured to pump coolant through the coolant circuit c2. Moreover, according to the embodiments illustrated in Fig. 2, also part of the coolant circuit c2 extends through the common conduit section 15. In this manner, the coolant circuit c2 can exchange coolant with the temperature conditioning circuit c1 via the common conduit section 15, and thus also exchange heat with the temperature conditioning circuit c1 via the common conduit section 15.

In other words, the arrangement 11 can be cooled by operating the coolant pumps p1, p2 and dissipating heat from coolant via the radiator r1 and/or by cooling coolant using the evaporator e1. Likewise, the arrangement 11 can be heated by operating the coolant pumps p1, p2 and operating the electrical heater 6.

The embodiments illustrated in Fig. 2 should only be seen as example embodiments, and the coolant system 1 as referred to herein may have a different layout than depicted in Fig. 2. For example, the coolant system 1 may lack the common conduit section 15. Instead, the coolant circuit c2, as referred to herein, may comprise one or more of a radiator configured to dissipate heat from the coolant circuit c2 to the surroundings, an evaporator configured to cool coolant in the coolant circuit c2, a condenser configured to heat coolant in the coolant circuit c2, an electrical heater controllable to heat coolant in the coolant circuit c2, and the like components.

Moreover, according to some embodiments, the coolant system 1 may be configured to cool and/or regulate the temperature of one or more further arrangements or systems of the vehicle 2, such as the electric propulsion machine 12 and the power electronics 14. According to such embodiments, the coolant system 1 may comprise a further coolant circuit extending through the common conduit section 15. Thus, in such embodiments, the arrangement 11 may be heated utilizing coolant/heat from such a further coolant circuit.

According to the illustrated embodiments, the coolant system 1 comprises an expansion vessel 19, wherein part of the coolant circuit c2 is configured to be deaerated via the expansion vessel 19. The expansion vessel 19 may also be referred to as an expansion tank, a coolant reservoir, or the like. In more detail, according to the embodiments illustrated in Fig. 2, the expansion vessel 19 is arranged above the common conduit section 15 with respect to the vertical direction vd' of the coolant system 1 and is connected to the common conduit section 15 via a deaeration line 16. In this manner, the temperature conditioning circuit c1 and part of the coolant circuit c2 can be deaerated via the deaeration line 16 and the expansion vessel 19. As can be seen in Fig. 2, part of the coolant circuit c2 is located above the expansion vessel 19 with respect to the vertical direction vd' of the coolant system 1.

The coolant system 1 comprises a deaeration conduit 3. The deaeration conduit 3 comprises a first end 3' connected to the coolant circuit c2 at a local height maximum of the coolant circuit c2 with respect to the vertical direction vd' of the coolant system 1. The term "local height maximum" of the coolant circuit c2, as referred to herein, means the highest point or section within at least a local portion of the coolant circuit c2 with respect to the vertical direction vd' of the coolant system 1. In other words, the term "local height maximum" indicates that no other sections or points, within this local portion of the coolant circuit c2, are located above the local height maximum, with respect to the vertical direction vd' of the coolant system 1. The local portion of the coolant circuit c2 as referred to above may, for example, constitute more than 5%, or more than 10%, of the total coolant circuit c2.

According to the embodiments illustrated in Fig. 2, the local height maximum of the coolant circuit c2 also constitutes the global height maximum of the coolant circuit c2, meaning that no other sections or points in the entire coolant circuit c2 are positioned above this local/global height maximum, with respect to the vertical direction vd' of the coolant system 1.

In other words, the term "global height maximum" of the coolant circuit c2 as referred to herein means the highest point or section of the coolant circuit c2 with respect to the vertical direction vd' of the coolant system 1.

Air within the coolant circuit c2 tends to accumulate at local/global height maximums of the coolant circuit c2 because of the natural tendency of air bubbles to rise to high points in the coolant circuit c2 due to buoyancy forces, which are driven by the difference in density between air and the coolant.

As can be seen in the schematic illustration of Fig. 2, the first end 3' of the deaeration conduit 3 is arranged above the expansion vessel 19 with respect to the vertical direction vd' of the coolant system 1. Moreover, according to the illustrated embodiments, the vertical distance d2 between the first end 3' of the deaeration conduit 3 and the expansion vessel 19 exceeds one metre. However, according to further embodiments, the vertical distance d2 between the first end 3' of the deaeration conduit 3 and the expansion vessel 19 may exceed half a metre.

The deaeration conduit 3 further comprises a second end 3". The second end 3" is arranged below the first end 3' with respect to the vertical direction vd' of the coolant system 1. The coolant system 1 further comprises a valve element 5 controllable between a closed state, in which the valve element 5 blocks the transfer of fluid through the deaeration conduit 3, and an open state, in which the valve element 5 allows the transfer of fluid through the deaeration conduit 3.

In this manner, a user is allowed to deaerate the coolant circuit 1 from a location below the local height maximum of the coolant circuit c2, i.e., without having to reach the connection point of the first end 3' at the local height maximum of the coolant circuit c2. In other words, conditions are provided for a quick, convenient, and safe deaeration procedure of the coolant circuit c2 of the coolant system 1.

Furthermore, since the coolant system 1 allows for deaeration procedures of the coolant circuit from the location below the local height maximum of the coolant circuit c2, the coolant system 1 circumvents the need for arranging an expansion vessel 19 above the local height maximum of the coolant circuit c2. In addition, the coolant system 1 allows for the placement of arrangements 11, such as propulsion batteries, at high locations on the vehicle 2 while being able to efficiently deaerate a coolant circuit c2 thereof in a quick, convenient, and safe manner.

According to the embodiments illustrated in Fig. 2, the vertical distance d1 between the first and second ends 3', 3" of the deaeration conduit 3 exceeds one metre. According to further embodiments, the vertical distance d1 between the first and second ends 3', 3" of the deaeration conduit 3 may exceed half a metre.

According to the illustrated embodiments, the second end 3" of the deaeration conduit 3 comprises a connector 7 configured for connection to an external deaeration assembly 23. The connector 7 may be a quick connector, such as a VDA standard quick connector or a SAE standard quick connector.

According to the embodiments illustrated in Fig. 1 and Fig. 2, the second end 3" and the connector 7 is arranged at a vertical distance of approximately 140 centimetres from a flat surface 51 supporting the vehicle 2 when the coolant system 1 is arranged on the vehicle 2 and the vehicle 2 is positioned in the use position onto the flat surface 51 as depicted in Fig. 1. The vertical distance between the second end 3"/the connector 7 and the flat surface 51 can be measured in directions perpendicular to the flat surface 51. According to further embodiments, the second end 3" and the connector 7 may be arranged at a vertical distance within the range of 50 - 190 cm, or within the range of 100 - 160 cm from a flat surface 51 supporting the vehicle 2 when the coolant system 1 is arranged on the vehicle 2 and the vehicle 2 is positioned in the use position onto the flat surface 51. In this manner, it can be ensured that the second end 3" and the connector 7 can be accessed in a simple and convenient manner by an average sized person standing next to the vehicle 2 on the flat surface 51.

As schematically depicted in Fig. 2, according to the illustrated embodiments, the valve element 5 is arranged in the connector 7. Moreover, in these embodiments, the valve element 5 is configured to assume the open state when the external deaeration assembly 23 is connected to the connector 7 and is configured to assume the closed state when the external deaeration assembly 23 is disconnected from the connector 7.

That is, in Fig. 2, an external deaeration assembly 23 is schematically depicted. In this context, the term "external" means that the deaeration assembly is not part of the vehicle 2 and instead constitutes a unit/assembly being separate from the vehicle 2.

The deaeration conduit 3 comprises a connector 7' connectable to the connector 7 of the deaeration conduit 3. The connector 7' of the external deaeration assembly 23 may also be referred to as an assembly connector. According to the illustrated embodiments, the valve element 5 in the connector 7 is configured to be mechanically moved to assume the open position by the connector 7' of the external deaeration assembly 23 when the connector 7' of the external deaeration assembly 23 is connected to the connector 7 of the deaeration conduit 3. Moreover, according to the illustrated embodiments, the valve element 5 is biased towards the closed position such that the valve element 5 assumes the closed position when the connector 7' of the external deaeration assembly 23 is removed from the connector 7 of the deaeration conduit 3. The valve element 5 may for example be biased towards the closed position by a spring element.

According to further embodiments, the coolant system 1 may comprise another type of valve element controllable between a closed state, in which the valve element blocks the transfer of fluid through the deaeration conduit 3, and an open state, in which the valve element allows the transfer of fluid through the deaeration conduit 3. For example, the valve element may be comprised in a valve assembly, wherein the valve assembly comprises an actuator, such as a knob, via which a user can control the valve element between the open and closed states. In such embodiments, the valve assembly may be arranged at the second end 3" of the deaeration conduit 3 and/or at or in the connector 7. As an alternative, the valve assembly may be arranged at a distance from the second end 3"/the connector 7 but at a location on the vehicle 2 such that the valve assembly can be accessed by an average sized person standing next to the vehicle 2 on a flat surface 51 supporting the vehicle 2, for example at a maximum vertical distance of 190 cm from the flat surface 51 as measured in a direction perpendicular to the flat surface 51.

As a further alternative, the valve element, as referred to herein, may be comprised in an electrical valve assembly comprising an electric actuator, such as a solenoid, configured to control the valve element between the open and closed states. According to such embodiments, the valve assembly may be arranged at any part of the deaeration conduit 3, such as at the first end 3', the second end 3", or any position along the deaeration conduit 3 therebetween. As understood from the above described, the valve element 5, as referred to herein, is to be in the closed state upon operation of the coolant system 1 and is to be controlled to the open state during deaeration procedures of the coolant circuit c2 of the coolant system 1.

According to the embodiments illustrated in Fig. 2, the deaeration conduit 3 is arranged such that its highest point 13 is located above the first end 3' with respect to the vertical direction vd' of the coolant system 1. In this manner, air can accumulate in this part of the deaeration conduit 3 during operation of the coolant circuit c2 as well as during standstill of the coolant system 1 comprising the coolant circuit c2.

Moreover, according to the illustrated embodiments, the deaeration conduit 3 is arranged such that its extension direction has a vector component parallel to the vertical direction vd' of the coolant system 1 along the full length of the deaeration conduit 3 between its highest point 13 with respect to the vertical direction vd' and the second end 3". This means that the deaeration conduit 3 is positioned in such a way that, throughout its entire length between the highest point 13 and the second end 3", there is a vector component of its extension direction that aligns with the vertical axis of the coolant system 1. Thereby, the formation of liquid locks is avoided in the deaeration conduit 3 between its highest point 13 and the second end 3". In this manner, deaeration procedures can be further simplified because gravity acting on coolant in the deaeration conduit 3 can be used to cause a flow of coolant through the deaeration conduit 3 towards the second end 3" during the deaeration procedures, as is further explained below.

Furthermore, according to the illustrated embodiments, the deaeration conduit 3 is arranged such that the extension direction of the deaeration conduit 3 has a vector component parallel to the vertical direction vd' of the coolant system 1 along the full length of the deaeration conduit 3 between the first end 3' and the highest point 13 of the deaeration conduit 3 with respect to the vertical direction vd'. Thereby, the formation of liquid locks is avoided in the deaeration conduit 3 between the first end 3' and the highest point 13 of the deaeration conduit 3.

As understood from the above described, when the vehicle 2 is at standstill, and the coolant system 1 is not operated, some air from the coolant circuit c2 can rise to the expansion vessel 19 via the common conduit section 15 and the deaeration line 16. However, air in other parts of the coolant circuit c2, such as those extending through the arrangement 11, is not able to reach the expansion vessel 19. This air may instead accumulate at the local/global height maximum of the coolant circuit c2 and/or at the highest point 13 of the deaeration conduit 3 according to the above described.

In a deaeration procedure of the coolant circuit c2, the external deaeration assembly 23 may be connected to the connector 7 of the deaeration conduit 3 by connecting the connector 7' of the external deaeration assembly 23 to the connector 7 of the deaeration conduit 3. As explained above, the valve element 5 may automatically assume the open state upon connection of the connector 7' of the external deaeration assembly 23 to the connector 7 of the deaeration conduit 3, or may be manually or electrically controlled to the open state.

According to the illustrated embodiments, the external deaeration assembly 23 comprises a pump assembly 24 configured to generate a negative pressure, i.e., a pressure below ambient pressure, at the connector 7' thereof, to suck fluid through the deaeration conduit 3 into the external deaeration assembly 23. The external deaeration assembly 23 may comprise an internal tank for accommodating any coolant received from the second end 3" of the deaeration conduit 3 or an outlet opening for draining coolant to a separate tank, bucket or the like.

Since the first end 3' of the deaeration conduit 3 is connected to the local/global height maximum of the coolant circuit c2, any air accommodated therein can be sucked therefrom through the deaeration conduit 3 and out from the deaeration conduit 3 via the second end 3" thereof.

Moreover, since the second end 3" of the deaeration conduit 3 is arranged below the first end 3' with respect to the vertical direction vd' of the coolant system 1, coolant may accumulate in the part of the deaeration conduit 3 between the highest point 13 thereof and the second end 3". Therefore, during a deaeration procedure, coolant may first enter the second end 3", followed by air, and then coolant again, drawn from the coolant circuit c2 of the coolant system 1. A user may be instructed to observe this sequence during the deaeration process, particularly to check if air enters the second end 3" of the deaeration conduit after some coolant has been drained. The user may be instructed to stop the deaeration procedure once coolant begins to flow from the second end 3" of the deaeration conduit 3 after air has passed through. Additionally, the user may be instructed to cancel the deaeration procedure after a predetermined time if only coolant continues to drain from the second end 3" without any air. As an alternative, or in addition, these instructions may be preprogrammed into an electronic control unit of the external deaeration assembly 23 to carry out the described deaeration procedure, with or without direct control or intervention from a user.

According to further embodiments, the deaeration procedure may be performed in another manner than described above. For example, the coolant system 1 may comprise a connector 17 arranged at another location than at the second end 3" of the deaeration conduit 3, wherein the connector 17 is used for pumping coolant into the coolant system 1. That is, in more detail, according to the embodiments illustrated in Fig. 2, the coolant circuit c2 of the coolant system 1 is provided with a connector 17 located at a relatively low position of the coolant circuit c2 with respect to the vertical direction vd' of the coolant system 1. In Fig. 2, the connector 17 is arranged at a region of the coolant pump p2 of the coolant circuit c2, more specifically upstream of the coolant pump p2. However, the connector 17 may alternatively be arranged downstream of the coolant pump p2.

In these embodiments, a user may connect an external deaeration assembly to the connector 17, wherein the external deaeration assembly comprises a pump for pumping coolant into the coolant circuit c2 via the connector 17 and possibly also a tank accommodating coolant to be fed to the pump of the external deaeration assembly. In these embodiments, the user may also connect a second external deaeration assembly to the connector 7 arranged at the second end 3" of the deaeration conduit 3 to collect fluid being drained via the deaeration conduit 3. As understood from the above described, the pumping of coolant into coolant circuit c2 via the connector 17 increases the pressure inside the coolant circuit c2 which can cause fluid flow through the deaeration conduit 3 to thereby deaerate the coolant circuit c2 via the deaeration conduit 3.

In these embodiments, the second external deaeration assembly may comprise a connector 7' according to the above described and a tank for collecting fluid drained from the second end 3" of the deaeration conduit 3 and/or an outlet opening for draining coolant to a separate tank, bucket or the like.

Furthermore, in embodiments wherein the coolant system 1 comprises a valve element 5 which can be electronically or manually controlled between the open and closed states, a user may simply be instructed to place a container at, or below, the second end 3" of the deaeration conduit 3, control the valve element to the open state, and pump coolant into the coolant circuit c2 via the connector 17, for example using the above type of external deaeration assembly configured to pump coolant into the coolant circuit c2.

As a further alternative, the coolant circuit c2 may be deaerated using the deaeration conduit 3 according to embodiments herein by utilizing one or more already existing coolant pumps p1, p2 of the coolant system 1. For example, the coolant pump p2 of the coolant circuit c2 may be operated to cause a flow of fluid through the deaeration conduit 3. Obviously, during such a procedure, the valve element may be controlled to the open state in any of the above described manners prior to initiating operation of the coolant pump p2. Coolant from the expansion vessel 19 can replace the volume of fluid being drained via the deaeration conduit 3 during such a deaeration procedure. Therefore, a user may be instructed to add coolant into the expansion vessel 19 during or after such a deaeration procedure.

The term "coolant" as used herein, is intended to encompass liquid coolant, such as a mixture of water and glycol. Therefore, the term "coolant", as used herein, may be replaced by the term "liquid coolant".

A coolant system 1, as referred to herein, is a system utilizing coolant to regulate the temperature of one or more arrangements 11, 12, 14 of the vehicle 2. The wording "regulate the temperature of" means that the coolant system 1 may be configured to cool and/or heat the one or more arrangements 11, 12, 14 of the vehicle 2. In some embodiments, the coolant system 1, as referred to herein, may be specifically intended for cooling one or more arrangements 11, 12, 14 of the vehicle 2. In such embodiments, the coolant system 1, as referred to herein, may also be referred to as a cooling system. Similarly, a coolant circuit c1, c2, as referred to herein, may be specifically intended for cooling one or more arrangements 11, 12, 14 of the vehicle 2, and may thus also be referred to as a cooling circuit.

As understood from the above described, the deaeration conduit 3 according to embodiments herein is part of the coolant system 1. Therefore, the deaeration conduit 3 is also part of the vehicle 2 when the coolant system 1 is mounted to the vehicle 2. The deaeration conduit 3 is thus a permanent/fixed installation of the vehicle 2 when the coolant system 1 is mounted to the vehicle 2.

The deaeration conduit 3 may be made of a rigid material, such as a metal alloy or a rigid polymeric material. Alternatively, or in addition, the deaeration conduit 3 may be made of a soft, pliant, and/or elastic material, such as an elastic polymer or rubber-based material. According to the embodiments illustrated in Fig. 1, the deaeration conduit 3 is attached to an outer part of the arrangement 11, which is temperature regulated by the coolant circuit c2. Alternatively, or in addition, the deaeration conduit 3 may be attached to another part of the vehicle 2 that comprises the coolant system 1.

It is to be understood that the foregoing is illustrative of various example embodiments and that the invention is defined only by the appended independent claims. A person skilled in the art will realize that the example embodiments may be modified, and that different features of the example embodiments may be combined to create embodiments other than those described herein, without departing from the scope of the present invention, as defined by the appended independent claims.

As used herein, the term "comprising" or "comprises" is open-ended, and includes one or more stated features, elements, steps, components, or functions but does not preclude the presence or addition of one or more other features, elements, steps, components, functions, or groups thereof.

## Claims

1. A coolant system (1) for a vehicle (2), wherein the coolant system (1) is configured to be mounted to the vehicle (2) such that a vertical direction (vd') thereof coincides with a vertical direction (vd) of the vehicle (2), wherein the coolant system (1) comprises:
- a coolant circuit (c2) configured to regulate the temperature of an arrangement (11) of the vehicle (2),
- a deaeration conduit (3), and
- a valve element (5) controllable between a closed state, in which the valve element (5) blocks the transfer of fluid through the deaeration conduit (3), and an open state, in which the valve element (5) allows the transfer of fluid through the deaeration conduit (3),
wherein the deaeration conduit (3) comprises a first end (3') connected to the coolant circuit (c2) at a local height maximum of the coolant circuit (c2) with respect to the vertical direction (vd') of the coolant system (1), and a second end (3") arranged below the first end (3') with respect to the vertical direction (vd') of the coolant system (1).

2. The coolant system (1) according to claim 1, wherein the vertical distance (d1) between the first and second ends (3', 3") of the deaeration conduit (3) exceeds half a metre, or exceeds one metre.

3. The coolant system (1) according to claim 1 or 2, wherein the second end (3") of the deaeration conduit (3) comprises a connector (7) configured for connection to an external deaeration assembly (23).

4. The coolant system (1) according to claim 3, wherein the valve element (5) is arranged in the connector (7).

5. The coolant system (1) according to claim 3 or 4, wherein the valve element (5) is configured to assume the open state when the external deaeration assembly (23) is connected to the connector (7) and is configured to assume the closed state when the external deaeration assembly (23) is disconnected from the connector (7).

6. The coolant system (1) according to any one of the preceding claims, wherein the coolant system (1) comprises an expansion vessel (19), wherein part of the coolant circuit (c2) is configured to be deaerated via the expansion vessel (19), and wherein the first end (3') of the deaeration conduit (3) is arranged above the expansion vessel (19) with respect to the vertical direction (vd') of the coolant system (1).

7. The coolant system (1) according to claim 6, wherein the vertical distance (d2) between the first end (3') of the deaeration conduit (3) and the expansion vessel (19) exceeds half a metre, or exceeds one metre.

8. The coolant system (1) according to any one of the preceding claims, wherein the local height maximum of the coolant circuit (c2) is also the global height maximum of the coolant circuit (c2).

9. The coolant system (1) according to any one of the preceding claims, wherein the deaeration conduit (3) is arranged such that its highest point (13) is located above the first end (3') with respect to the vertical direction (vd') of the coolant system (1).

10. The coolant system (1) according to any one of the preceding claims, wherein the deaeration conduit (3) is arranged such that its extension direction has a vector component parallel to the vertical direction (vd') of the coolant system (1) along the full length of the deaeration conduit (3) between its highest point (13) with respect to the vertical direction (vd') and the second end (3").

11. The coolant system (1) according to any one of the preceding claims, wherein the deaeration conduit (3) is arranged such that the extension direction of the deaeration conduit (3) has a vector component parallel to the vertical direction (vd') of the coolant system (1) along the full length of the deaeration conduit (3) between the first end (3') and the highest point (13) of the deaeration conduit (3) with respect to the vertical direction (vd').

12. The coolant system (1) according to any one of the preceding claims, wherein the arrangement (11) of the vehicle (2) is a propulsion battery.

13. A vehicle (2) comprising a coolant system (1) according to any one of the preceding claims.

14. The vehicle (2) according to claim 13, wherein the vehicle (2) is a heavy wheeled vehicle, such as a truck or a bus.
